# DEMANDE DE BREVET EUROPEEN

(11) **EP 1 840 191 A1**
(43) Date de publication de la demande: **03.10.2007**
(21) Numéro de dépôt: 07290375.0
(22) Date de dépôt: 29.03.2007
(51) Int. Cl.: C10J 3/20, C10J 3/57, C10J 3/48, C10J 3/84

(54) **Installation de gazéification de biomasse avec dispositif de craquage des goudrons dans le gaz de synthèse produit**

(30) Priorité: 31.03.2006 FR 0602840
(71) Demandeur: Electricité de France, 75008 Paris (FR)
(72) Inventeur: Kaikov, Igor, 76275 Ettlingen (DE); Bourtourault, Guillaume, 75010 Paris (FR); Lelait, Laurent, 76297 Stutensee (DE); Khomenko, Nikolai, LOE 1NO Pefferlaw Town of Georgia (CA)
(74) Mandataire: Pöpping, Barbara

(57) **Abrégé**

L'invention concerne une installation de gazéification de biomasse comprenant au moins une zone de combustion ou chambre de combustion (2) alimentée à sa base par un flux continu de biomasse et par un flux continu de gaz oxydant, dans laquelle a lieu la combustion d'une partie de la biomasse, et une zone de gazéification ou chambre de gazéification (1) alimentée à sa base par un gaz réducteur, dans laquelle a lieu la gazéification proprement dite de la biomasse en gaz de synthèse, et une conduite d'évacuation (6) sortant de la zone ou chambre de gazéification, le gaz de synthèse produit dans la zone de gazéification ou chambre de gazéification étant soumis à une étape d'épuration par passage de la conduite d'évacuation véhiculant ledit gaz de synthèse dans une enceinte chaude (7) présentant une température supérieure à celle de la chambre de gazéification, de manière à y absorber par échange thermique la chaleur nécessaire au craquage d'au moins une partie du goudron contenu dans le gaz de synthèse.

## Description

La présente invention concerne une installation de gazéification de biomasse présentant un nouveau dispositif d'épuration du gaz de synthèse produit en sortie de la zone ou chambre de gazéification de celle-ci, ainsi qu'un nouveau procédé de gazéification de biomasse utilisant cette installation.

Dans le cadre du développement durable, la valorisation de la biomasse qui est, par définition, une source d'énergie renouvelable, occupe une place très importante. Cette valorisation peut se faire par combustion, par fermentation, ou bien par pyrolyse et gazéification. Parmi ces différentes possibilités, la gazéification de la biomasse, c'est-à-dire sa transformation en un gaz combustible, est particulièrement intéressante car elle permet la production, non seulement de chaleur, mais également d'énergie électrique dans des installations appelées « co-générateurs ». Le gaz obtenu, lorsqu'il a un pouvoir calorifique suffisant, peut en effet être utilisé en tant que carburant pour faire fonctionner un moteur à combustion interne ou une turbine à gaz, reliés à un alternateur.

L'utilisation du gaz de synthèse obtenu par gazéification de la biomasse nécessite toutefois une épuration préalable de celui-ci afin de le débarrasser des particules de cendre et de goudron formées et entraînées dans la conduite d'évacuation. Cette épuration entraîne des surcoûts importants d'investissement et de maintenance. Le gaz de synthèse subit en effet une succession d'opérations assez complexes comprenant le refroidissement dans un échangeur de chaleur, un filtrage, généralement dans un filtre à manches, et un lavage dans une tour de lavage. L'échange de chaleur a pour fonction de refroidir le gaz de la température de fonctionnement de la chambre de gazéification (environ 850 °C) à environ 150 °C afin de le rendre compatible avec le système de filtration. L'échangeur de chaleur est obstrué à intervalles réguliers par des bouchons de suie et de goudron qui viennent se condenser sur les parois des tubes. Le système de filtration à manches est également très complexe : les filtres à manches sont préalablement recouverts de chaux afin d'éviter le colmatage des manches par les goudrons et particules volantes. A intervalles réguliers, le filtre doit être nettoyé par soufflage en sens inverse afin de décoller la couche de chaux souillée, puis de la chaux propre doit être appliquée. Enfin, l'étape de lavage se fait généralement par passage du gaz dans un solvant organique, par exemple de l'ester méthylique de colza (biodiesel), où la plus grande partie des goudrons restants est dissoute et retenue. Le solvant de lavage chargé en impuretés doit être régulièrement remplacé.

La mauvaise connaissance des mécanismes de formation des goudrons et la carence de solutions industrielles satisfaisantes constituent actuellement le principal verrou au développement de la gazéification.

La demande de brevet US 2004/0045272 divulgue une installation de gazéification de matière organique en lit fluidisé dans lequel le gaz produit est soumis, en sortie de la chambre de gazéification, à un reformage dans un reformeur. Ce reformeur est conçu comme un échangeur de chaleur utilisant l'énergie du gaz de combustion de l'installation. Dans ce reformeur, le gaz à épurer passe dans une conduite garnie avec un lit de particules de catalyseur de reformage, par exemple des particules à base de métaux nobles tels que le platine ou le nickel, ou à base d'oxydes métalliques tels que l'oxyde de fer ou l'alumine. La structure de ce reformeur nécessite un dépoussiérage préalable du flux de gaz afin d'éviter le bouchage dudit dispositif (voir paragraphe [0023]).

Dans le cadre de ses recherches visant à améliorer la rentabilité économique des procédés de gazéification connus, la Demanderesse a trouvé un moyen relativement simple permettant de réduire considérablement la teneur en goudrons et en particules du gaz de synthèse, avant de le soumettre aux opérations de nettoyage indiquées ci-dessus. Ce moyen, proposé dans la présente demande, présente considérablement moins de risques de bouchage que le reformeur décrit dans US 2004/0045272.

Grace au moyen de réduction de la teneur en goudrons et en particules proposé dans la présente demande, l'intervalle entre deux nettoyages de l'échangeur de chaleur, du filtre à manches et de la tour de lavage peut être considérablement allongé, ou bien il peut être envisagé de supprimer totalement une ou plusieurs de ces étapes de post-traitement du gaz de synthèse.

Ce moyen de nettoyage du gaz de synthèse chargé en goudron et particules de cendre, consiste à exposer ledit gaz, de préférence avant refroidissement et avant toute autre opération d'épuration, à un craquage thermique des goudrons, éventuellement couplé à un craquage catalytique, en faisant passer la conduite d'évacuation véhiculant le gaz de synthèse dans une enceinte très chaude portée à une température suffisante pour décomposer une fraction importante des goudrons en composé gazeux. A l'intérieur de cette enceinte chaude, la conduite d'évacuation a la forme d'un siphon et est remplie d'un liquide. Le gaz de synthèse passe à travers ce liquide sous forme de fines bulles. Pendant ce passage, les goudrons sont détruits par craquage et les particules sont retenues par le liquide.

La présente invention a par conséquent pour objet une installation de gazéification de biomasse comportant au moins une zone de combustion ou chambre de combustion alimentée à sa base par un flux continu de biomasse et par un flux continu de gaz oxydant, dans laquelle a lieu la combustion d'une partie de la biomasse fournie au procédé en vue de la production de l'énergie thermique nécessaire à la gazéification de l'autre partie de la biomasse fournie au procédé, et, en communication de fluide avec la zone ou chambre de combustion, au moins une zone de gazéification ou chambre de gazéification alimentée à sa base par un gaz réducteur, dans laquelle a lieu la gazéification proprement dite de la biomasse en gaz de synthèse, et au moins une conduite d'évacuation sortant de la zone ou chambre de gazéification. Dans cette installation, le gaz de synthèse produit dans la zone de gazéification ou chambre de gazéification est soumis à une étape d'épuration par passage de la conduite d'évacuation véhiculant ledit gaz de synthèse, dans une enceinte chaude présentant une température supérieure à celle de la zone de gazéification ou de la chambre de gazéification, de manière à y absorber par échange thermique la chaleur nécessaire au craquage d'au moins une partie du goudron contenu dans le gaz de synthèse. A l'intérieur de ladite enceinte la conduite d'évacuation du gaz de synthèse a la forme d'un siphon et est remplie d'un milieu liquide.

L'installation de gazéification selon l'invention peut être un gazéificateur vertical classique comportant une enceinte unique dont la partie inférieure correspond à la zone de combustion où est brûlée une partie de la biomasse, et dont la partie supérieure constitue la zone de gazéification de la biomasse n'ayant pas été brûlée dans la zone de combustion.

Dans un mode de réalisation préféré de la présente invention l'installation de gazéification de biomasse est une installation à lit circulant comportant
- une chambre de gazéification alimentée à sa base, d'une part, par un flux continu de biomasse à gazéifier et, d'autre part, par un flux continu de gaz réducteur,
- un moyen d'alimentation de la chambre de gazéification par un flux de biomasse à gazéifier, débouchant à la base de celle-ci,
- un moyen d'alimentation de la chambre de gazéification par un flux de gaz réducteur débouchant à la base de celle-ci,
- une chambre de combustion alimentée à sa base, d'une part, par un flux continu de biomasse provenant de la chambre de gazéification et, d'autre part, par un flux continu de gaz oxydant,
- un moyen d'alimentation de la chambre de combustion par un flux de gaz oxydant débouchant à la base de celle-ci,
- un siphon supérieur et un siphon inférieur reliant les deux chambres l'une à l'autre de manière à permettre le passage d'un milieu caloporteur tout en interdisant le passage des gaz contenus dans celui-ci,
- un milieu caloporteur circulant en continu d'une chambre à l'autre en passant par les siphons supérieur et inférieur reliant les deux chambres,
- une conduite d'évacuation des gaz de combustion partant de la partie supérieure de la chambre de combustion, et
- une conduite d'évacuation du gaz de synthèse produit par gazéification de la biomasse dans la chambre de gazéification.

Dans ce mode de réalisation préféré, le gaz de synthèse produit dans la chambre de gazéification est soumis à une étape d'épuration par passage de la conduite d'évacuation véhiculant ledit gaz de synthèse, dans une enceinte chaude présentant une température supérieure à celle de la chambre de gazéification, de manière à y absorber par échange thermique la chaleur nécessaire au craquage d'au moins une partie du goudron contenu dans le gaz de synthèse.

La présente invention a également pour objet un procédé de gazéification de biomasse susceptible d'être mise en oeuvre sur une installation telle que décrite ci-dessus. Un tel procédé comprend les étapes successives suivantes:
- introduction d'un flux de biomasse dans une chambre de gazéification contenant un milieu caloporteur liquide, chauffée à une température de gazéification T1,
- dans la chambre de gazéification, mélange du flux de biomasse avec le milieu caloporteur et avec un flux de gaz réducteur débouchant à la base de la chambre de gazéification,
- conversion d'une partie de la biomasse en gaz de synthèse par chauffage à la température T1 en présence du gaz réducteur,
- évacuation du gaz de synthèse produit dans la chambre de gazéification par une conduite d'évacuation partant de la partie supérieure de la chambre de gazéification,
- transfert de la fraction non convertie de la biomasse mélangée au milieu caloporteur vers une chambre de combustion via un siphon qui permet le transfert du mélange biomasse/milieu caloporteur mais empêche le transfert de la phase gazeuse de la chambre de gazéification vers la chambre de combustion,
- dans la chambre de combustion, mélange de la biomasse et du milieu caloporteur avec un gaz oxydant alimentant la chambre de combustion, de préférence au niveau de la base de celle-ci,
- combustion de la biomasse en présence du gaz oxydant,
- séparation du gaz de combustion d'avec le milieu caloporteur,
- évacuation du gaz de combustion par une conduite d'évacuation et transfert du milieu caloporteur vers la chambre de gazéification,
caractérisé par le fait que le gaz de synthèse produit dans la chambre de gazéification est soumis à une étape d'épuration par passage dudit gaz de synthèse dans un liquide chauffé à une température T2 supérieure à celle de la chambre de gazéification (T1), ledit liquide étant contenu dans un siphon formé par la conduite d'évacuation du gaz de synthèse.

On comprendra qu'un tel système de chauffage du gaz de synthèse, en vue du craquage des goudrons, immédiatement en aval de la chambre de gazéification peut être ajouté très facilement à n'importe quelle installation de gazéification existante sans nécessiter d'importantes modifications de structure de celle-ci.

Il est connu que l'efficacité du craquage des goudrons est directement liée à la température de craquage. Plus celle-ci est élevée, plus le craquage est complet. Pour cette raison, la température dans l'enceinte chaude est de préférence au moins égale à 900 °C, et en particulier comprise entre 950 °C et 1100 °C.

Bien que la solution la plus facile à mettre en oeuvre d'un point de vue mécanique consisterait à faire passer la conduite d'évacuation du gaz de synthèse dans un four prévu à cet effet, chauffé à la température appropriée, cette solution est peu satisfaisante d'un point de vue économique car elle demande un apport d'énergie thermique important qui diminue considérablement la rentabilité globale du procédé.

C'est pourquoi la Demanderesse a essayé de trouver des solutions techniques permettant de mettre à profit des sources de chaleur déjà existantes dans l'installation de gazéification. Dans un mode de réalisation préféré de l'invention, l'enceinte chaude est par conséquent formée par la zone de combustion ou la chambre de combustion de l'installation de gazéification ou par une chambre de post-combustion éventuellement présente en aval de la chambre de combustion, autrement dit, on fait passer la conduite d'évacuation du gaz de synthèse, de préférence immédiatement en sortie de la zone de gazéification ou chambre de gazéification, dans la zone de combustion ou chambre de combustion, de préférence dans la partie supérieure de celle-ci où la température est la plus élevée, ou bien dans une chambre de post-combustion présente dans la plupart des installations à lit circulant et destinée à parfaire la combustion et à débarrasser ainsi les gaz de combustion des principaux polluants.

Pour que le craquage des goudrons soit le plus efficace et complet possible, il est important d'optimiser l'échange de chaleur entre le gaz de synthèse et l'enceinte chaude, par exemple par un allongement de la durée de séjour du gaz dans la partie de la conduite comprise dans l'enceinte et/ou par une augmentation de la surface d'échange thermique.

La Demanderesse a trouvé que ces deux effets pouvaient être obtenus grâce à une conduite d'évacuation qui, dans la partie comprise dans l'enceinte chaude, était conçue comme un siphon rempli d'un milieu liquide à la température de l'enceinte chaude. La signification du terme « siphon » dans ce contexte n'est pas limitée à une forme particulière de la conduite mais englobe tout système ou dispositif dans lequel deux espaces remplis de gaz sont séparés par un espace rempli de liquide, et qui permet, par exemple grâce à des injecteurs, le passage dudit gaz sous pression d'un espace vers l'autre à travers le liquide, avec formation de bulles plus ou moins fines au sein dudit liquide.

Le milieu liquide utilisable dans un tel siphon doit résister aux températures élevées du four, de la chambre de combustion ou la chambre de post-combustion, et doit être soit inerte vis-à-vis de la réaction de craquage thermique, soit avoir un effet catalytique facilitant la réaction de craquage. Le milieu liquide est choisi de préférence parmi les métaux fondus et les sels fondus ou encore un mélange de métaux et/ou de sels fondus.

On peut citer à titre d'exemples de métaux utilisables en tant que milieu liquide présent dans le siphon les métaux fondus ayant un point de fusion inférieur à 900 °C, de préférence le sodium et le plomb.

Les sels fondus sont choisis par exemple parmi les sels minéraux et mélanges de sels minéraux ayant un point de fusion inférieur à 900 °C, de préférence parmi l'hydroxyde de sodium, l'hydroxyde de potassium, et un mélange de carbonates de métaux alcalins, en particulier un mélange de carbonate de lithium, de potassium et de sodium.

La conduite d'évacuation véhiculant le gaz de synthèse comporte avantageusement, dans sa partie située à l'intérieur de l'enceinte chaude,
- des moyens mécaniques augmentant la surface d'échange thermique entre le gaz de synthèse à épurer et la conduite d'évacuation ; il peut s'agir par exemple d'un ensemble de déflecteurs prévus sur la surface intérieure de la paroi de la conduite d'évacuation qui a pour fonction supplémentaire de prolonger le chemin d'écoulement du gaz de synthèse dans la conduite d'évacuation ;
- des moyens mécaniques augmentant la surface d'échange thermique entre le gaz de synthèse à épurer et le milieu liquide éventuellement présent dans la conduite ; il peut s'agir par exemple d'une grille, d'une plaque perforée, d'un ensemble de tubes, d'une série d'obstacles, telles que des billes ou particules, ou encore d'un système d'agitation favorisant la formation de fines bulles de gaz à l'intérieur du milieu liquide présent dans le siphon, et/ou
- des moyens mécaniques augmentant la surface d'échange thermique entre la conduite d'évacuation et l'enceinte chaude ; il peut s'agir par exemple d'un système d'éléments, tels que des ailettes, faisant saillie à partir de la surface extérieure de la paroi dans l'enceinte chaude.

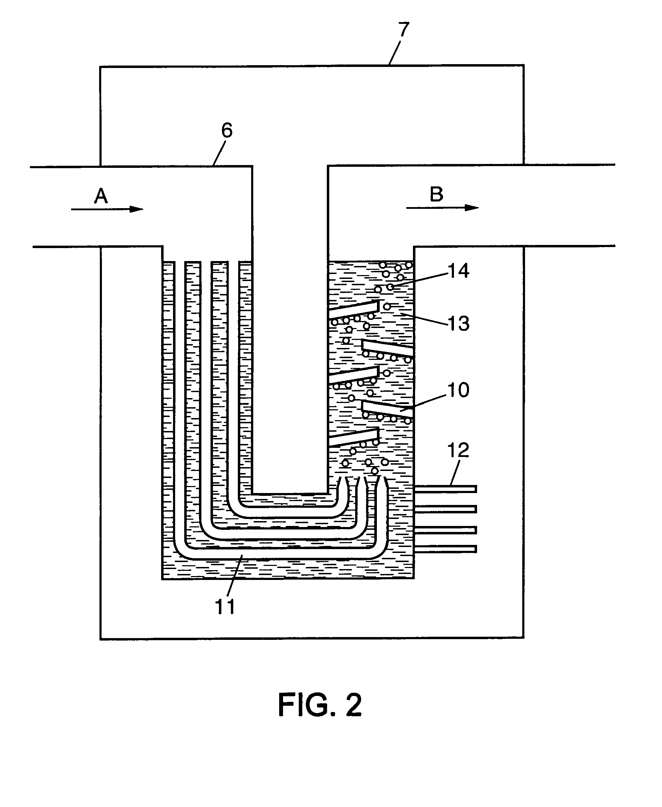

Un exemple de réalisation simple d'un tel système de siphon est représenté sur la figure 2 annexée.

Sur cette figure 2, la conduite d'évacuation 6 véhiculant, dans le sens de la flèche A, le gaz de synthèse chargé de goudrons provenant de la chambre de gazéification forme un seul coude vers le bas rempli de milieu liquide 13. Une pluralité de fines conduites 11 dans la partie descendante du coude amènent le gaz de synthèse au fond de la partie ascendante du coude où il est libéré et entre en contact directe avec le milieu liquide 13 avec formation d'un grand nombre de petites bulles 14 qui remontent vers la surface du milieu liquide dans la partie ascendante du coude. La partie ascendante du coude contient un ensemble de déflecteurs 10, horizontaux ou légèrement inclinés, qui empêchent les bulles de gaz de synthèse de remonter directement, dans le sens vertical, vers la surface et prolongent ainsi la durée de vie des bulles 14 et par conséquent le temps de contact direct entre gaz de synthèse et le milieu liquide. La conduite 6 peut également comporter, à n'importe quel endroit situé dans l'enceinte chaude 7, des éléments 12 faisant saillie à partir de la surface extérieure de la conduite et améliorant l'échange thermique entre la conduite 6 et l'enceinte chaude 7. Le craquage du goudron se fait aussi bien dans la pluralité de fines conduites 11, qui peuvent éventuellement être remplies d'un matériau catalytique (non représenté), que dans les fines bulles 14 formées dans la partie ascendante du coude. La mise en contact direct du gaz de synthèse avec le milieu liquide 13 provoquera en outre la rétention d'au moins une partie des particules de cendre. Ces particules, en fonction de la nature et de la température du milieu liquide, resteront en suspension dans le milieu liquide ou bien pourront fondre et/ou se dissoudre dans celui-ci. Il sera par conséquent utile de prévoir un système de nettoyage par recyclage du milieu liquide (non représenté). Le gaz de synthèse débarrassé d'une fraction importante de goudron et de particules de cendre quitte l'enceinte chaude 7 par la conduite d'évacuation dans le sens de la flèche B.

L'installation de gazéification de la présente invention est de préférence une installation de gazéification indirecte, c'est-à-dire une installation dans laquelle la combustion d'une partie de la biomasse, fournissant l'énergie nécessaire à la réaction de gazéification, a lieu dans une chambre de combustion séparée de la chambre de gazéification.

Ce principe de fonctionnement implique généralement l'alimentation de la chambre de combustion avec un gaz oxydant, par exemple l'air ou l'oxygène moléculaire, et l'alimentation de la chambre de gazéification par un gaz réducteur, idéalement de la vapeur d'eau relativement pure qui aboutira à la formation d'un gaz de synthèse constitué essentiellement de monoxyde de carbone et d'hydrogène moléculaire. Les gaz traversant respectivement ces deux chambres, à savoir le gaz oxydant et le gaz de combustion dans la chambre de combustion d'une part, et le gaz réducteur et le gaz de synthèse dans la chambre de gazéification d'autre part, ne se trouvent à aucun moment mélangés, grâce à deux siphons qui relient les chambres de combustion et de gazéification et qui permettant à la fois le passage du milieu caloporteur et la rétention des gaz dans les chambres de combustion et de gazéification.

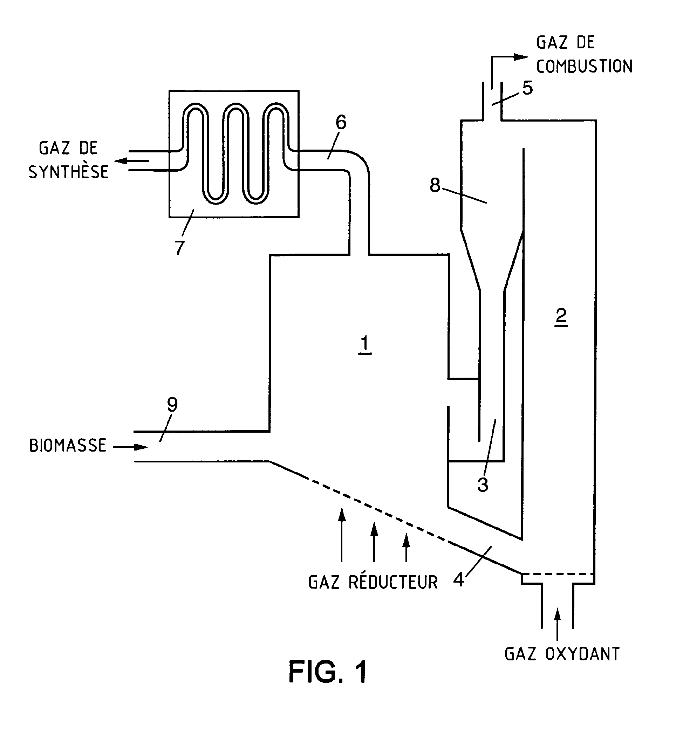

Un exemple concret d'une telle installation de gazéification est celui du cogénérateur fonctionnant dans la ville de Güssing en Autriche. Une telle installation est illustrée à titre d'exemple à la Figure 1 annexée à la présente demande. Cette installation de gazéification comprend une chambre de gazéification 1 alimentée à sa base par un flux continu de biomasse sous forme de particules de bois introduites par un moyen d'alimentation en biomasse 9, par exemple une vis sans fin. Cette biomasse se mélange progressivement au milieu caloporteur présent dans la chambre de gazéification. Ce milieu caloporteur est généralement du sable fin ayant éventuellement des propriétés catalytiques de la réaction de gazéification. La chambre de gazéification est en outre alimentée par un flux continu de gaz réducteur, généralement de la vapeur d'eau filtrée, introduite par des orifices répartis sur une grande partie du fond de la chambre de gazéification 2. La plus grande partie de la biomasse mélangée au milieu caloporteur et au gaz réducteur subit une réaction de pyrolyse et de gazéification à une température proche de 850 °C avec formation d'un gaz de synthèse constitué essentiellement de CO et de H₂, et pollué par des goudrons et des cendres. Une autre partie de la biomasse mélangée au milieu caloporteur, après avoir glissé par gravité le long du fond incliné de la chambre de gazéification 1, traverse un siphon inférieur 4 reliant celle-ci à la chambre de combustion 2. Le gaz de synthèse est évacué par une conduite d'évacuation 6.

La chambre de combustion 2 de l'installation est alimentée à sa base, d'une part, par un flux continu de biomasse et de milieu caloporteur provenant de la chambre de gazéification 1 et, d'autre part, par un flux continu de gaz oxydant introduit à sa base. Le milieu caloporteur, circule en continu d'une chambre à l'autre en passant par le siphon supérieur 3 et le siphon inférieur 4 qui relient les deux chambres de manière à permettre le passage dudit milieu caloporteur tout en interdisant le passage des gaz contenus dans celui-ci. Il est formé de particules de sable, de préférence de l'olivine ayant un pouvoir catalytique de la réaction de gazéification. A la sortie de la chambre de combustion, un cyclone 8 sépare le milieu caloporteur du gaz de combustion formé et l'envoie dans le siphon supérieur 3 qui l'achemine de nouveau vers la chambre de gazéification 1. Les gaz de combustion quittent l'installation par une conduite d'évacuation 5 qui est avantageusement interrompue par un dispositif de post-combustion (non représenté).

L'installation de Güssing est un cogénérateur comportant en outre des moyens de combustion du gaz de synthèse produit, reliés à des alternateurs pour la production d'énergie électrique.

La température dans la chambre de combustion est d'environ 950 °C. Cette température de la chambre de combustion détermine directement celle de la chambre de gazéification. Elle est avantageusement la plus élevée possible mais est toutefois limitée par le point de fusion des cendres et par une bonne rentabilité globale du procédé. En effet, une température de combustion plus élevée impliquerait la consommation d'une fraction plus importante de biomasse qui n'est alors plus disponible pour la gazéification.

La température de la chambre de gazéification est d'environ 850 °C. Cette température est limitée vers le haut par la température de la chambre de combustion, par le caractère endothermique de la réaction de gazéification, et par les pertes de chaleur dues au transfert thermique entre la chambre de combustion et la chambre de gazéification.

Il est connu que l'augmentation de la température de gazéification réduit considérablement la production de goudrons, objectif principal de la présente invention. La Demanderesse s'est donc fixé pour but supplémentaire d'optimiser le transfert thermique entre la chambre de combustion et la chambre de gazéification et l'échange thermique entre le milieu caloporteur et la biomasse afin de réduire le plus possible la production de goudrons dans le gaz.

Ce but a pu être atteint grâce au remplacement du milieu caloporteur particulaire, utilisé habituellement dans des installations de gazéification indirecte à lit fluidisé circulant (installation de Güssing), par un milieu caloporteur liquide.

Dans un mode de réalisation préféré de l'invention, le milieu caloporteur circulant en continu d'une chambre à l'autre est par conséquent un matériau qui est liquide à la température de la chambre de gazéification. Le caractère liquide du milieu caloporteur lui permet de pénétrer plus aisément dans les particules de biomasse et favorise ainsi un contact intime entre ces deux composants. L'état liquide permet en outre une bonne homogénéisation thermique des composants présents dans les chambres grâce au phénomène de convection, inexistant dans le cas d'un milieu particulaire.

Le milieu caloporteur liquide peut être choisi parmi les métaux fondus et les sels fondus ou encore les mélanges de métaux et/ou de sels fondus, de préférence parmi les métaux et sels minéraux inertes vis-à-vis de la réaction de gazéification ou catalysant la réaction de gazéification.

Le milieu caloporteur doit bien entendu résister aux températures élevées régnant dans la chambre de combustion et doit avoir, à la température de la chambre de gazéification, une viscosité suffisamment basse pour permettre la formation d'un mélange intime avec la biomasse et les phénomènes de convexion mentionnés ci-dessus. Le milieu caloporteur a de préférence un point de fusion compris entre 650 et 850 °C, en particulier entre 700 °C et 800 °C.

On peut citer à titre d'exemples de métaux et/ou de sels utilisables en tant que milieu caloporteur liquide le sodium et le plomb, ou un sel fondu choisi parmi l'hydroxyde de sodium, l'hydroxyde de potassium, et les mélanges de carbonates de métaux alcalins, en particulier un mélange de carbonate de lithium, de potassium et de sodium.

Dans l'installation de gazéification de Güssing décrite ci-dessus, le transfert de chaleur de la chambre de combustion (production de chaleur) vers la chambre de gazéification (consommation de chaleur) se fait exclusivement par l'intermédiaire du milieu caloporteur. Pour réduire le plus possible l'écart de température entre ces deux chambres et pour optimiser la rentabilité globale de l'installation, il est indispensable de prévoir une excellente isolation thermique des chambres et des siphons assurant le transfert du milieu caloporteur.

Dans une variante particulièrement préféré de l'installation de la présente invention, le problème de l'isolation thermique et de la réduction de l'écart de température entre la chambre de combustion et la chambre de gazéification est résolu par le fait que l'installation présente une configuration telle que la chambre de combustion est en contact de conduction thermique avec la chambre de gazéification, autrement dit les deux chambres ont au moins une paroi en commun ou présentent chacune au moins une paroi en contact avec une paroi de l'autre chambre.

Dans un mode de réalisation particulièrement avantageux de la présente invention, la chambre de combustion est située à l'intérieur de la chambre de gazéification, c'est-à-dire la chambre de gazéification entoure la chambre de combustion sur toute la circonférence de celle-ci, de manière à ce qu'une quantité importante de la chaleur de combustion puisse être transférée directement, par conduction et éventuellement par convection, vers la chambre de gazéification. Cette disposition de la chambre de combustion au centre de la chambre de gazéification permet de résoudre complètement le problème d'isolation thermique de la chambre de combustion et de réduire en outre sensiblement l'écart de température entre la chambre de combustion et la chambre de gazéification. Ce dernier effet est particulièrement prononcé lorsque le milieu caloporteur est un milieu liquide garantissant une bonne homogénéisation thermique à l'intérieur de chacune des chambres.

Le transfert de chaleur de la chambre de combustion vers la chambre de gazéification peut encore être optimisé de manière connue en prévoyant des moyens mécaniques d'augmentation de la surface de contact de conduction thermique entre les deux chambres, tels que des ailettes faisant saillie vers l'intérieur d'une des deux chambres.

Dans une configuration concentrique des chambres de combustion et de gazéification telle que décrite ci-dessus, il reste toutefois le problème de l'isolation thermique de la chambre de gazéification vis-à-vis de l'environnement extérieur. Ce problème supplémentaire peut être résolu grâce à une chambre de gazéification isolée de l'extérieur par le fait qu'elle est située, à son tour, à l'intérieur de l'enceinte de stockage de la biomasse. De cette manière, la chaleur dégagée au niveau de la paroi extérieure la chambre de gazéification est transférée directement, par conduction et éventuellement par convection, vers l'enceinte de stockage de la biomasse. Cette disposition ne résout non seulement le problème de l'isolation thermique de la chambre de gazéification mais met également avantageusement à profit la chaleur dégagée par la chambre de gazéification pour le séchage de la biomasse dans l'enceinte de séchage.

L'écart de température entre la chambre de gazéification, fonctionnant à des températures comprises entre 800 °C et 900 °C, et la température de séchage appropriée de la biomasse qui, avantageusement, ne devrait pas dépasser 150 °C, est toutefois trop importante pour que l'enceinte de stockage de la biomasse puisse être placée en contact direct de conduction thermique avec la chambre de gazéification, sans risque d'inflammation de la biomasse. Il est par conséquent généralement nécessaire d'interposer une couche d'isolation thermique entre la chambre de gazéification et l'enceinte de stockage de la biomasse, de préférence sur toute la surface de contact entre ces deux enceintes.

## Revendications

1. Installation de gazéification de biomasse comportant au moins une zone de combustion ou chambre de combustion alimentée à sa base par un flux continu de biomasse et par un flux continu de gaz oxydant, au moins une zone de gazéification ou chambre de gazéification alimentée à sa base par un gaz réducteur et en communication de fluide avec la zone ou chambre de combustion, et au moins une conduite d'évacuation du gaz de synthèse sortant de la zone ou chambre de gazéification, ladite conduite d'évacuation du gaz de synthèse passant dans une enceinte susceptible d'être chauffée à une température supérieure à celle de la chambre de gazéification, **caractérisée par le fait que** la conduite d'évacuation du gaz de synthèse, à l'intérieur de ladite enceinte, a la forme d'un siphon et est remplie d'un milieu liquide.

2. Installation de gazéification selon la revendication 1, **caractérisée par le fait qu'**il s'agit d'une installation de gazéification à lit circulant comportant
- une chambre de gazéification (1),
- un moyen d'alimentation (9) de la chambre de gazéification par un flux de biomasse à gazéifier débouchant à la base de celle-ci,
- un moyen d'alimentation de la chambre de gazéification par un flux de gaz réducteur débouchant à la base de celle-ci,
- une chambre de combustion (2),
- un moyen d'alimentation de la chambre de combustion par un flux de gaz oxydant débouchant à la base de celle-ci,
- un siphon supérieur (3) et un siphon inférieur (4) reliant les deux chambres de manière à permettre le passage d'un milieu caloporteur tout en interdisant le passage des gaz contenus dans celui-ci,
- une conduite d'évacuation (5) des gaz de combustion partant de la partie supérieure de la chambre de combustion (2) et
- une conduite d'évacuation (6) du gaz de synthèse produit par gazéification de la biomasse dans la chambre de gazéification (1),
ladite conduite d'évacuation (6) du gaz de synthèse passant dans une enceinte (7) susceptible d'être chauffée à une température supérieure à celle de la chambre de gazéification,
et **caractérisée en outre par le fait que** la conduite d'évacuation (6) du gaz de synthèse, à l'intérieur de ladite enceinte (7), a la forme d'un siphon et est remplie d'un milieu liquide.

3. Installation de gazéification de biomasse selon la revendication 1 ou 2, **caractérisée par le fait que** l'enceinte (7) est susceptible d'être chauffée à une température au moins égale à 900 °C, de préférence comprise entre 950 °C et 1100 °C.

4. Installation selon l'une quelconque des revendications précédentes, **caractérisée par le fait que** l'enceinte (7) est formée par la zone de combustion ou chambre de combustion (2) ou une chambre de post-combustion éventuellement présente en aval de la chambre de combustion.

5. Installation selon l'une quelconque des revendications précédentes, **caractérisée par** le fait quelle ne comporte pas de dispositif d'épuration du gaz de synthèse véhiculé par la conduite d'évacuation (6) en amont de l'enceinte (7).

6. Installation selon l'une quelconque des revendications précédentes, **caractérisée par le fait que** le milieu liquide dans la conduite d'évacuation (6) en forme de siphon est choisi parmi les métaux fondus et les sels fondus ou un mélange de métaux et/ou de sels fondus.

7. Installation selon la revendication 6,
**caractérisée par le fait que** les métaux fondus sont choisis parmi ceux ayant un point de fusion inférieur à 900 °C, de préférence parmi le sodium et le plomb, et que les sels fondus sont choisis parmi les sels minéraux et mélanges de sels minéraux ayant un point de fusion inférieur à 900 °C, de préférence parmi l'hydroxyde de sodium, l'hydroxyde de potassium, et un mélange de carbonates de métaux alcalins, en particulier un mélange de carbonate de lithium, de potassium et de sodium.

8. Installation selon l'une quelconque des revendications précédentes, **caractérisée par le fait que** la conduite d'évacuation (6) du gaz de synthèse comporte, dans sa partie située à l'intérieur de l'enceinte (7), des moyens mécaniques favorisant l'échange thermique entre le gaz de synthèse à épurer et la conduite d'évacuation, favorisant l'échange thermique entre le gaz de synthèse à épurer et le milieu liquide et/ou favorisant l'échange thermique entre la conduite d'évacuation (6) et l'enceinte (7).

9. Installation selon la revendication 8,
**caractérisée par le fait que** le moyen mécanique favorisant l'échange thermique est formé par un système de déflecteurs prolongeant le chemin d'écoulement du gaz de synthèse dans la conduite d'évacuation (6).

10. Installation selon la revendication 8,
**caractérisée par le fait que** le moyen mécanique est une grille, une plaque perforée, un ensemble de tubes, une série d'obstacles ou un système d'agitation favorisant la formation de fines bulles de gaz à l'intérieur du milieu liquide présent dans le siphon.

11. Installation selon l'une quelconque des revendications 2 à 10, **caractérisé par le fait que** le milieu caloporteur est un milieu liquide à la température de la chambre de gazéification.

12. Installation selon la revendication 11,
**caractérisée par le fait que** le milieu caloporteur est choisi parmi les métaux fondus et les sels fondus ou un mélange de métaux et/ou de sels fondus.

13. Installation selon la revendication 12,
**caractérisée par le fait que** les métaux fondus et les sels fondus sont choisis parmi les métaux et sels minéraux inertes vis-à-vis de la réaction de gazéification ou catalysant la réaction de gazéification.

14. Installation selon la revendication 13,
**caractérisée par le fait qu'**elle contient, en tant que milieu caloporteur, un composé ayant un point de fusion compris entre 650 et 850 °C, de préférence entre 700 °C et 800 °C.

15. Installation selon l'une quelconque des revendications 11 à 14, **caractérisée par le fait qu'**elle contient, en tant que milieu caloporteur, un métal fondu choisi parmi le sodium et le plomb, ou un sel fondu choisi parmi l'hydroxyde de sodium, l'hydroxyde de potassium, et un mélange de carbonates de métaux alcalins, en particulier un mélange de carbonate de lithium, de potassium et de sodium.

16. Installation selon l'une quelconque des revendications précédentes, **caractérisée par le fait qu'**elle présente une configuration telle que la chambre de combustion est en contact de conduction thermique avec la chambre de gazéification.

17. Installation selon la revendication 16,
**caractérisée par le fait que** la chambre de combustion est située à l'intérieur de la chambre de gazéification de manière à ce qu'une quantité importante de la chaleur de combustion puisse être transférée directement, par conduction et éventuellement par convection, vers la chambre de gazéification.

18. Installation selon la revendication 16 ou 17,
**caractérisée par le fait qu'**elle comporte des moyens mécaniques augmentant la surface de contact de conduction thermique entre la chambre de combustion et la chambre de gazéification.

19. Installation selon l'une quelconque des revendications précédentes, **caractérisée par le fait qu'**elle a une configuration telle que la chambre de gazéification est en contact de conduction thermique avec une enceinte de stockage de la biomasse.

20. Installation selon la revendication 19,
**caractérisée par le fait que** la chambre de gazéification est située à l'intérieur de l'enceinte de stockage de la biomasse de manière à ce qu'une partie de la chaleur dégagée au niveau de la paroi extérieure la chambre de gazéification puisse être transférée directement, par conduction et éventuellement par convection, vers l'enceinte de stockage de la biomasse.

21. Installation selon la revendication 19 ou 20,
**caractérisée par le fait qu'**une couche d'isolation thermique est prévue entre la chambre de gazéification (1) et l'enceinte de stockage de la biomasse.

22. Procédé de gazéification de biomasse, comprenant les étapes successives suivantes :
- introduction d'un flux de biomasse (9) dans une chambre de gazéification (1) contenant un milieu caloporteur, chauffée à une température de gazéification T1,
- dans la chambre de gazéification (1), mélange du flux de biomasse avec le milieu caloporteur et avec un flux de gaz réducteur débouchant à la base de la chambre de gazéification,
- conversion d'une partie de la biomasse en gaz de synthèse,
- évacuation du gaz de synthèse produit dans la chambre de gazéification par une conduite d'évacuation (6) et transfert de la fraction non convertie de la biomasse mélangée au milieu caloporteur vers une chambre de combustion (2),
- dans la chambre de combustion, mélange de la biomasse et du milieu caloporteur avec un gaz oxydant alimentant la chambre de combustion,
- combustion de la biomasse,
- séparation du gaz de combustion d'avec le milieu caloporteur,
- évacuation du gaz de combustion par une conduite d'évacuation (5) et transfert du milieu caloporteur vers la chambre de gazéification (1),
**caractérisé par le fait que** le gaz de synthèse produit dans la chambre de gazéification (1) est soumis à une étape d'épuration par passage dudit gaz de synthèse dans un liquide chauffé à une température T2 supérieure à celle de la chambre de gazéification (T1), ledit liquide étant contenu dans un siphon formé par la conduite d'évacuation du gaz de synthèse.

23. Procédé selon la revendication 22, **caractérisée par le fait que** la température T2 est au moins égale à 900 °C, de préférence comprise entre 950 et 1100 °C.

24. Procédé selon la revendication 22 ou 23,
**caractérisée par le fait que** l'étape d'épuration du gaz de synthèse par passage dans un liquide chauffé à une température T2 est mise en oeuvre préalablement à toute autre étape de d'épuration du gaz de synthèse.

25. Procédé selon l'une quelconque des revendications 22 - 24, **caractérisé par le fait que** le milieu liquide est choisi parmi les métaux fondus et les sels fondus ou un mélange de métaux et/ou de sels fondus.

26. Procédé selon l'une quelconque des revendications 22 - 25, **caractérisé par le fait que** les métaux fondus sont choisis parmi ceux ayant un point de fusion inférieur à 900 °C, de préférence parmi le sodium et le plomb, et que les sels fondus sont choisis parmi les sels minéraux et mélanges de sels minéraux ayant un point de fusion inférieur à 900 °C, de préférence parmi l'hydroxyde de sodium, l'hydroxyde de potassium, et un mélange de carbonates de métaux alcalins, en particulier un mélange de carbonate de lithium, de potassium et de sodium.
